# EUROPÄISCHE PATENTSCHRIFT

(11) **EP 3 384 194 B1**
(45) Veröffentlichungstag und Bekanntmachung des Hinweises auf die Patenterteilung: **08.01.2025**
(21) Anmeldenummer: 16809311.0
(22) Anmeldetag: 30.11.2016
(51) Int. Cl.: F16L 23/032

(54) **VERFAHREN ZUM HERSTELLEN EINES FLANSCHROHLINGS UND EINES FLANSCHES, UND FLANSCHROHLING**
METHOD FOR PRODUCING A FLANGE BLANK AND FOR PRODUCING A FLANGE, AND FLANGE BLANK
PROCÉDÉ DE FABRICATION D'UNE ÉBAUCHE DE FLASQUE ET D'UN FLASQUE, ET ÉBAUCHE DE FLASQUE

(30) Priorität: 01.12.2015 DE 102015223874
(43) Veröffentlichungstag der Anmeldung: 10.10.2018
(73) Patentinhaber: Minimax GmbH, 23843 Bad Oldesloe (DE)
(72) Erfinder: ENDE, Ralf, 23843 Bad Oldesloe (DE); STACHOWITZ, Frank, 23909 Ratzeburg (DE); KEMPF, Peter, 23843 Bad Oldesloe (DE); POHL, Matthias, 23847 Stubben (DE)
(74) Vertreter: Eisenführ Speiser
(86) Internationale Anmeldenummer: PCT/EP2016/079180
(87) Internationale Veröffentlichungsnummer: WO 2017/093275

(56) Entgegenhaltungen:
- EP-A1- 0 315 723
- EP-A1- 0 878 644
- US-A- 2 412 487

## Beschreibung

Die Erfindung betrifft ein Verfahren zum Herstellen eines Flanschrohlings, mit dem Schritt: Herstellen eines Grundkörpers, wobei der Grundkörper einen Fluiddurchgang, einen Stützabschnitt mit einer ersten Materialstärke und einen Kraftaufnahmeabschnitt mit einer zweiten Materialstärke umfasst und die zweite Materialstärke größer ist als die erste Materialstärke.

Die Erfindung betrifft ferner ein Verfahren zum Herstellen eines Flansches, wobei das Verfahren zum Herstellen eines Flansches den Schritt des Herstellens einer Anzahl von Flanschrohlingen umfasst.

Außerdem betrifft die Erfindung einen Flanschrohling für die Herstellung eines Flansches, mit einem Grundkörper, welcher einen Fluiddurchgang, einen Stützabschnitt mit einer ersten Materialstärke und einen Kraftaufnahmeabschnitt mit einer zweiten Materialstärke umfasst, wobei die zweite Materialstärke größer ist als die erste Materialstärke.

Flansche werden in verschiedenen Anwendungsbereichen zum lösbaren Verbinden von Rohrabschnitten verwendet. Durch den Einsatz von Flanschen wird zwischen den miteinander verbundenen Rohrabschnitten eine fluidleitende Verbindung hergestellt.

Üblicherweise weisen Flansche einen Grundkörper mit einem Fluiddurchgang auf, wobei der Grundkörper mit einem Rohrabschnitt verschweißbar ist. Der Grundkörper des Flansches kann beispielsweise einen ringförmigen Ansatz aufweisen, welcher zum Verschweißen mit dem Rohrabschnitt ausgebildet ist. Ein Aufschieben des Flansches auf den Rohrabschnitt ist somit nicht notwendig. Ferner sind Flansche bekannt, welche auf den Rohrabschnitt aufgeschoben werden, bevor die Verschweißung mit dem Rohrabschnitt stattfindet.

Flansche weisen außerdem eine den Fluiddurchgang umgebende Dichtfläche auf. Die Dichtflächen zweier Flansche können somit fluiddicht miteinander verbunden werden, so dass ein fluidleitender Durchgang durch die Grundkörper der miteinander verbundenen Flansche und somit auch zwischen den mit den Flanschen verschweißten Rohrabschnitten erzeugt wird.

Zur Gewährleistung einer fluiddichten Verbindung zwischen zwei Flanschen ist eine Verpressung der Dichtabschnitte der Flansche notwendig. Der Anpressdruck wird üblicherweise durch Schraubenverbindungen erzeugt. Hierzu weisen die Grundkörper der miteinander zu verbindenden Flansche korrespondierende Durchgangslöcher auf, in welche Schrauben eingesetzt und anschließend mittels Muttern angezogen werden können.

Abhängig von dem Einsatzgebiet der Flansche hat sich die Verwendung von verschiedenen Bohrbildern durchgesetzt. In einigen Anwendungsbereichen unterliegen die zu verwendenden Bohrbilder sogar verbindlichen Normen.

Ein Anwendungsbereich von Flanschen sind Feuerlöschanlagenventile, wie Trockenalarmventile, Sprühwasserventile und Nassalarmventile. In diesem Anwendungsbereich werden Flansche auch zur Integration von Steinfängern und Rückschlagklappen eingesetzt.

Insbesondere im Bereich der Feuerlöschanlagenventile besteht der Bedarf an Flanschen mit unterschiedlichen Bohrbildern, da sich in den verschiedenen Ländern und Regionen dieser Welt die Verwendung unterschiedlicher Bohrbilder durchgesetzt hat. Die verwendeten Bohrbilder können abhängig von dem Land oder der Region, in welchem der Flansch verbaut werden soll, eine unterschiedliche Anzahl von Durchgangslöchern und/oder eine unterschiedliche Anordnung der Durchgangslöcher aufweisen.

Zur Reduzierung des Materialeinsatzes weist der Grundkörper eines Flansches üblicherweise einen Stützabschnitt mit einer ersten Materialstärke und einen Kraftaufnahmeabschnitt mit einer zweiten Materialstärke auf. Die zweite Materialstärke im Bereich des Kraftaufnahmeabschnitts ist größer als die erste Materialstärke im Bereich des Stützabschnitts, da der Kraftaufnahmeabschnitt die Durchgangslöcher für die Schrauben aufweist, welche zum Verpressen der Dichtflächen der Flansche verwendet werden. Die Krafteinleitung erfolgt im Kontaktbereich zwischen Grundkörper und Schraubenkopf bzw. zwischen Grundkörper und Schraubenmutter. Aufgrund der in diesem Kontaktbereich auftretenden höheren Belastung des Flansches weist der Kraftaufnahmeabschnitt eine größere Materialstärke als der Stützabschnitt auf. Da durch die Verschraubung keine unmittelbare Krafteinleitung in den Stützabschnitt des Flansches erfolgt, kann dieser eine geringere Materialstärke aufweisen. Dies führt zu einer Materialeinsparung im Herstellungsprozess und zu einer Gewichtsreduktion des Flansches.

Zum Herstellen der Flansche werden üblicherweise Flanschrohlinge eingesetzt, deren Grundkörper bereits der gewünschten Flanschgrundform entspricht, jedoch noch keine Durchgangslöcher entsprechend eines bestimmten Bohrbildes aufweist. Zum Herstellen von Flanschen mit unterschiedlichen Bohrbildern werden im Stand der Technik unterschiedliche Flanschrohlinge verwendet, welche einen Grundkörper aufweisen, deren Stützabschnitt und Kraftaufnahmeabschnitt an ein einzelnes später einzubringendes Bohrbild angepasst ist. Somit wird bei der Herstellung von Flanschen mit unterschiedlichen Bohrbildern zwar eine Materialeinsparung erreicht, jedoch bedarf die Herstellung unterschiedlicher Flanschrohlinge eines hohen Produktionsaufwands.

EP 0 315 723 A1 oder US 2 412 487 A betreffen jeweils Flansche aus Stahl sowie aus Aluminium bzw. Metall. Die Flansche weisen einen Stützabschnitt sowie einen Kraftaufnahmeabschnitt auf, wobei die Materialstärke des Kraftaufnahmeabschnittes jene des Stützabschnittes übersteigt. Die Flansche weisen zur Gewichtsreduktion reduzierte Außenkonturen auf, wobei in jeden Flansch nur exakt ein Bohrbild eingebracht werden kann.

EP 0 878 644 A1 zeigt einen Flansch dessen Durchmesser, durch Abtrennen ringförmiger Bestandteile reduziert werden kann. Der Flansch weist Bohrungen auf, jedoch ist erneut durch die Ausgestaltung des Kraftaufnahmeabschnittes determiniert, in welchem Bereich diese Bohrungen eingebracht werden. Auch dieser Flansch ermöglicht es nicht, unterschiedliche Bohrbilder einzubringen,
Aufgabe der vorliegenden Erfindung ist es folglich eine Lösung bereitzustellen, welche die Herstellungskosten von Flanschen mit unterschiedlichen Bohrbildern reduziert.

Die Aufgabe wird gelöst durch ein Verfahren zum Herstellen eines Flanschrohlings gemäß den Merkmalen von Anspruch 1. Dabei ist der Kraftaufnahmeabschnitt zum wahlweisen Erzeugen von Durchgangslöchern entsprechend eines ersten Bohrbildes und eines zweiten Bohrbildes ausgebildet.

Die Erfindung macht sich die Erkenntnis zunutze, dass durch ein derartiges Verfahren ein Flanschrohling bereitgestellt wird, bei welchem es unabhängig von der Tatsache, ob ein erstes Bohrbild, ein zweites Bohrbild oder eine Kombination aus dem ersten und zweiten Bohrbild erzeugt werden soll, zu einer Materialeinsparung kommt und gleichzeitig die Notwendigkeit mehrerer Flanschrohlinge zum Herstellen von Flanschen mit unterschiedlichen Bohrbildern überwunden wird..

Vorzugsweise weist der Grundkörper des Flanschrohlings Abschnitte mit weiteren Materialstärken auf, welche sich von der ersten Materialstärke und der zweiten Materialstärke unterscheiden. Beispielsweise weist der Grundkörper einen Rohrverbindungsabschnitt auf, welcher als Ansatz ausgebildet ist und eine erhabene Kreisringfläche zum Verschweißen mit einem Rohrabschnitt aufweist. Insbesondere ist ein Verfahren bevorzugt, bei welchem das erste Bohrbild einer ersten Norm entspricht und das zweite Bohrbild einer zweiten Norm entspricht. Vorzugsweise entspricht das erste Bohrbild und/oder das zweite Bohrbild einer Norm ausgewählt aus der Liste bestehend aus DIN EN 1092-1, DIN EN 1092-2, DIN EN 1092-3, DIN 2501-1 und ANSI B16.5.

In einer bevorzugten Ausführungsform des erfindungsgemäßen Verfahrens zum Herstellen eines Flanschrohlings umfasst der Schritt des Herstellens eines Grundkörpers den folgenden Schritt:
- Herstellen eines Flanschrohlinggussstücks mittels eines Gussverfahrens.

Vorzugsweise erfolgt das Herstellen des Flanschrohlinggussstücks mittels eines Druckgussverfahrens, eines Kokillengussverfahrens, eines Kunststoff-Spritzgussverfahrens, eines Niederdruckgussverfahrens oder eines Gussverfahrens unter Verwendung einer verlorenen Form.

Mittels des Druckgussverfahrens sind Flanschrohlinggussstücke aus verschiedenen metallischen Werkstoffen, wie beispielsweise Aluminium, Zink, Magnesium oder Siliziumtombak kostengünstig und in großen Stückzahlen herstellbar. Mittels des Kokillengussverfahrens sind Flanschrohlinggussstücke auch kostengünstig und in großen Stückzahlen aus Stahl herstellbar. Ferner ist das Kunststoff-Spritzgussverfahren bei komplexen Flanschrohlinggussstückgeometrien vorteilhaft.

Alternativ oder zusätzlich umfasst das erfindungsgemäße Verfahren zum Herstellen eines Flanschrohlings den folgenden Schritt:
- Nacharbeiten des Flanschrohlinggussstücks mittels eines spanenden Bearbeitungsverfahrens.

Vorzugsweise umfasst das Nachbearbeiten des Flanschrohlinggussstücks mittels eines spanenden Bearbeitungsverfahrens das Entgratens des Flanschrohlinggussstücks, beispielsweise durch Abschleifen von Oberflächenabschnitten des Grundkörpers, das Fräsen einer planen Dichtfläche, das Ausfräsen einer Nut für ein Dichtungselement , das Aufbohren des Fluiddurchgangs des Grundkörpers und/oder das Entfernen von Angusskörpern, beispielsweise einem Speiser bzw. Steiger im Einfüll- und Entlüftungsbereich des Flanschrohlinggussstücks.

Das erfindungsgemäße Verfahren zum Herstellen eines Flanschrohlings wird ferner dadurch vorteilhaft weitergebildet, dass das Herstellen eines Flanschrohlinggussstücks mittels eines Gussverfahrens unter Verwendung einer mehrteiligen, insbesondere zweiteiligen Gussform erfolgt. Durch die Verwendung lediglich einer Gussform können somit Flanschrohlinge zum Herstellen von Flanschen für unterschiedliche Märkte hergestellt werden. Dies führt zu einer weiteren Reduzierung des Kostenaufwandes. Bei der Verwendung einer mehrteiligen Gussform können Aussparungen, beispielsweise zur Erzeugung des Stütz- und Kraftaufnahmeabschnitts, in unterschiedliche Richtungen in den Flanschrohling eingebracht werden. Somit erlaubt die Verwendung einer zweiteiligen Gussform das Erzeugen von Aussparungen in zumindest zwei Richtungen und die Verwendung einer vierteiligen Gussform das Erzeugen von Aussparungen in zumindest vier Richtungen.

Die Aufgabe wird ferner durch ein Verfahren zum Herstellen eines Flansches der eingangs genannten Art gelöst, wobei das Verfahren die folgenden Schritte umfasst:
- Herstellen einer Anzahl von Flanschrohlingen gemäß einer der vorstehend beschriebenen Ausführungsformen des Verfahrens zum Herstellen eines Flanschrohlings; und
- wahlweises Erzeugen von Durchgangslöchern entsprechend eines ersten Bohrbildes und/oder eines zweiten Bohrbildes in dem Kraftaufnahmeabschnitt des Grundkörpers, wobei sich das erste Bohrbild und das zweite Bohrbild in der Anzahl der Durchgangslöcher und in der Anordnung der Durchgangslöcher unterscheiden.

Dadurch, dass nach dem Verfahren zum Herstellen des Flanschrohlings der Kraftaufnahmeabschnitt bereits zum wahlweisen Erzeugen von Durchgangslöchern entsprechend eines erstes Bohrbildes und/oder eines zweiten Bohrbildes ausgebildet ist, können nunmehr Durchgangslöcher entsprechend eines ersten Bohrbildes, eines zweiten Bohrbildes oder Durchgangslöcher entsprechend einer Kombination des ersten und zweiten Bohrbildes in den Kraftaufnahmeabschnitt eingebracht werden. Das erfindungsgemäße Verfahren zum Herstellen eines Flansches erlaubt es folglich aus einem Flanschrohling verschiedene Flansche herzustellen, wobei sich die verschiedenen Flansche in ihrem Bohrbild, also in der Anordnung und Anzahl der eingebrachten Durchgangslöcher, unterscheiden.

In einer vorteilhaften Ausführungsform des erfindungsgemäßen Verfahrens zum Herstellen eines Flansches umfasst der Schritt des wahlweisen Erzeugens von Durchgangslöchern entsprechend eines ersten Bohrbildes und/oder eines zweiten Bohrbildes in dem Kraftaufnahmeabschnitt des Grundkörpers einen, mehrere oder sämtliche der folgenden Schritte:
- Erzeugen einer ersten Anzahl von Bohrungen entsprechend des ersten Bohrbildes in dem Kraftaufnahmeabschnitt des Grundkörpers;
- Erzeugen von Bohrungen in einer ersten Anordnung entsprechend des ersten Bohrbildes in dem Kraftaufnahme des Grundkörpers;
- Erzeugen einer zweiten Anzahl von Bohrungen entsprechend des zweiten Bohrbildes in dem Kraftaufnahmeabschnitt des Grundkörpers;
- Erzeugen von Bohrungen in einer zweiten Anordnung entsprechend des zweiten Bohrbildes in dem Kraftaufnahmeabschnitt des Grundkörpers.

In einer besonders bevorzugten Ausführungsform des erfindungsgemäßen Verfahrens zum Herstellen eines Flansches umfasst der Schritt des wahlweisen Erzeugens von Durchgangslöchern entsprechend eines ersten Bohrbildes und/oder eines zweiten Bohrbildes in dem Kraftaufnahmeabschnitt des Grundkörpers einen der folgenden Schritte:
- Auswählen und Verwenden eines ersten Gusseinsatzes zum Erzeugen von Durchgangslöchern entsprechend des ersten Bohrbildes;
- Auswählen und Verwenden eines zweiten Gusseinsatzes zum Erzeugen von Durchgangslöchern entsprechend eines zweiten Bohrbildes;
- Auswählen und Verwenden eines dritten Gusseinsatzes zum Erzeugen von Durchgangslöchern entsprechend des ersten und zweiten Bohrbildes.

Neben der Möglichkeit die Durchgangslöcher zu bohren, kann das Erzeugen der Durchgangslöcher bereits während des Gießprozesses erfolgen. Da sich das erste Bohrbild von dem zweiten Bohrbild in der Anzahl der Durchgangslöcher und/oder der Anordnung der Durchgangslöcher unterscheidet, sind zur Erzeugung des ersten Bohrbildes und des zweiten Bohrbildes unterschiedliche Gusseinsätze zu verwenden. Soll mittels des erfindungsgemäßen Verfahrens zum Herstellen eines Flansches ein Flansch hergestellt werden, welcher sowohl die Durchgangslöcher entsprechend des ersten Bohrbildes als auch die Durchgangslöcher entsprechend des zweiten Bohrbildes aufweist, ist somit ein dritter Gusseinsatz zu verwenden. Alternativ können der erste Gusseinsatz und der zweite Gusseinsatz gleichzeitig verwendet werden, um einen Flansch mit den Durchgangslöchern entsprechend des ersten und des zweiten Bohrbildes zu erzeugen.

Das erfindungsgemäße Verfahren zum Herstellen eines Flansches wird ferner dadurch vorteilhaft weitergebildet, dass mittels des Verfahrens zum Herstellen eines Flanschrohlings gemäß einer der vorstehend beschriebenen Ausführungsformen eine Mehrzahl identischer Flanschrohlinge hergestellt wird, bevor in dem Kraftaufnahmeabschnitt des Grundkörpers eines ersten Flanschrohlings Durchgangslöcher entsprechend des ersten Bohrbildes und in dem Kraftaufnahmeabschnitt des Grundkörpers eines zweiten Flanschrohlings Durchgangslöcher entsprechend des zweiten Bohrbildes erzeugt werden. Bevorzugt ist ferner ein Verfahren zum Herstellen eines Flansches, bei welchem in dem Kraftaufnahmeabschnitt des Grundkörpers eines dritten Flanschrohlings Durchgangslöcher entsprechend des ersten und zweiten Bohrbildes erzeugt werden.

Die Aufgabe wird ferner gelöst durch einen Flanschrohling für die Herstellung eines Flansches gemäß den Merkmalen von Anspruch 8.

Hinsichtlich der Vorteile des erfindungsgemäßen Flanschrohlings wird auf die Vorteile des erfindungsgemäßen Verfahrens zum Herstellen eines Flanschrohlings und auf die Vorteile des erfindungsgemäßen Verfahrens zum Herstellen eines Flansches verwiesen.

In einer bevorzugten Ausführungsform des erfindungsgemäßen Flanschrohlings ist der Kraftaufnahmeabschnitt dazu angepasst, Mittelachsen der Durchgangslöcher des ersten Bohrbildes und des zweiten Bohrbildes vollumfänglich zu umgeben. Dadurch, dass die Mittelachsen der Durchgangslöcher des ersten Bohrbildes und des zweiten Bohrbildes vollumfänglich durch den Kraftaufnahmeabschnitt umgeben werden, können Durchgangslöcher erzeugt werden, welche ebenfalls vollumfänglich von dem Kraftaufnahmeabschnitt umgeben werden. Der Kraftaufnahmeabschnitt weist eine größere Materialstärke als der Stützabschnitt auf. Somit wird die Kraft, welche von dem jeweiligen Schraubenkopf bzw. der zugehörigen Mutter in den Flansch eingeleitet wird vollumfänglich von dem Kraftaufnahmeabschnitt, also von einem Grundkörperabschnitt mit einer hohen Materialstärke, aufgenommen.

Gemäß der Erfindung erstreckt sich der Fluiddurchgang entlang einer Längsachse, wobei der Kraftaufnahmeabschnitt in einer Ebene orthogonal zu der Längsachse eine Außenkontur aufweist, welche vorzugsweise rotationssymmetrisch um die Längsachse oder spiegelsymmetrisch gegenüber einer Symmetrieachse, durch welche die Längsachse verläuft, ausgebildet ist. Durch eine rotationssymmetrische Außenkontur des Kraftaufnahmeabschnitts erfolgt bei geeigneten Bohrbildern eine besonders homogene Krafteinleitung. Durch die homogene Krafteinleitung werden Spannungsspitzen innerhalb des Grundkörpers des späteren Flansches vermieden, so dass die Materialstärke des Kraftaufnahmeabschnitts und die Materialstärke des Stützabschnitts verringert werden können, ohne dass es zu einer Beeinträchtigung der Belastbarkeit des späteren Flansches kommt. Bei anderen Bohrbildern ist eine spiegelsymmetrische Außenkontur des Kraftaufnahmeabschnitts vorteilhaft und führt zu einer homogenen Kraftverteilung innerhalb des Grundkörpers. Insbesondere bei Bohrbildern, welche eine erste Gruppe von Durchgangslöchern auf einer ersten Seite des Flansches und eine zweite Gruppe von Durchgangslöchern auf einerzweiten gegenüberliegenden Seite des Flansches aufweisen, führt eine spiegelsymmetrische Ausbildung der Außenkontur des Kraftaufnahmeabschnitts zu einem homogeneren Kraftfluss innerhalb des Grundkörpers.

Zudem ist an dem Flanschrohling gemäß der Erfindung vorgesehen, dass die Außenkontur des Kraftaufnahmeabschnitts abgerundete Abschnitte umfasst, wobei mehrere erste abgerundete Abschnitte einen ersten Radius und mehrere zweite abgerundete Abschnitte einen zweiten Radius aufweisen. Der erste Radius unterscheidet sich vorzugsweise von dem zweiten Radius. Durch das Vorsehen von Radien werden ebenfalls Spannungsspitzen innerhalb des Grundkörpers vermieden. Dies erlaubt folglich eine weitere Reduzierung der Materialstärke des Kraftaufnahmeabschnitts und des Stützabschnitts des Grundkörpers. Vorzugsweise umfasst die Außenkontur des Kraftaufnahmeabschnitts einen oder mehrere dritte abgerundete Abschnitte mit einem dritten Radius, wobei sich der dritte Radius von dem ersten Radius und dem zweiten Radius unterscheidet. Die Positionierung bzw. Anordnung sowie die Größe der einzelnen Radien ist gemäß der Erfindung auf das erste Bohrbild und/oder das zweite Bohrbild abgestimmt.

In einer weiteren bevorzugten Ausführungsform des erfindungsgemäßen Flanschrohlings verlaufen ein oder mehrere Radien der abgerundeten Abschnitte jeweils koaxial zu einer Mittelachse eines Durchgangslochs des ersten Bohrbildes oder des zweiten Bohrbildes.

Ferner ist ein Flanschrohling bevorzugt, bei welchem der Stützabschnitt eine orthogonal zu der Mittelachse verlaufende Außenkontur aufweist, welche im Wesentlichen kreisrund ausgebildet ist. Die vom Kraftaufnahmeabschnitt in den Stützabschnitt des Grundkörpers eingebrachten Kräfte können sich aufgrund der kreisrund ausgebildeten Außenkontur besonders homogen innerhalb des Grundkörpers verteilen, so dass eine weitere Materialstärkenreduzierung des Stützabschnitts möglich ist.

Die Aufgabe wird ferner durch die Verwendung eines Flanschrohlings gemäß einer der vorstehend beschriebenen Ausführungsformen in einem Verfahren zum Herstellen eines Flansches gemäß einer der vorstehend beschriebenen Ausführungsformen gelöst.

Hinsichtlich der Vorteile der erfindungsgemäßen Verwendung wird auf die Vorteile des erfindungsgemäßen Verfahrens zum Herstellen eines Flanschrohlings, die Vorteile des erfindungsgemäßen Verfahrens zum Herstellen eines Flansches und auf die Vorteile des erfindungsgemäßen Flanschrohlings verwiesen.

Sofern weiter oben die Formulierung "und/oder" verwendet wurde, so wird hierin verstanden, dass eines, mehrere oder sämtliche der in der Aufzählung genannten Elemente gemeint sein können. Die Formulierung "aufweisend" ist als nicht abschließende Aufzählung zu verstehen.

Die Erfindung wird im Folgenden unter Bezugnahme auf die beigefügen Figuren anhand von bevorzugten Ausführungsbeispielen näher beschrieben. Hierbei zeigen:
- Fig. 1: ein Ausführungsbeispiel des erfindungsgemäßen Flanschrohlings in einer Draufsicht;
- Fig. 2: den Flanschrohling aus Fig. 1 in einer seitlichen Schnittdarstellung;
- Fig. 3a: einen aus dem Flanschrohling aus Fig. 1 hergestellten Flansch aufweisend ein erstes Bohrbild;
- Fig. 3b: einen aus dem Flanschrohling aus Fig. 1 hergestellten Flansch aufweisend ein zweites Bohrbild;
- Fig. 4: ein Ausführungsbeispiel des erfindungsgemäßen Flanschrohlings in einer Draufsicht;
- Fig. 5: den Flanschrohling aus Fig. 4 in einer seitlichen Schnittdarstellung;
- Fig. 6a: einen aus dem Flanschrohling aus Fig. 4 hergestellten Flansch aufweisend ein erstes Bohrbild;
- Fig. 6b: einen aus dem Flanschrohling aus Fig. 4 hergestellten Flansch aufweisend ein zweites Bohrbild;
- Fig. 7: ein Ausführungsbeispiel des erfindungsgemäßen Flanschrohlings in einer Draufsicht;
- Fig. 8: den Flanschrohling aus Fig. 7 in einer seitlichen Schnittdarstellung;
- Fig. 9a: einen aus dem Flanschrohling aus Fig. 7 hergestellten Flansch aufweisend ein erstes Bohrbild;
- Fig. 9b: einen aus dem Flanschrohling aus Fig. 7 hergestellten Flansch aufweisend ein zweites Bohrbild;

- Fig. 10: ein Ausführungsbeispiel des erfindungsgemäßen Flanschrohlings in einer Draufsicht;
- Fig. 11: den Flanschrohling aus Fig. 10 in einer seitlichen Schnittdarstellung;
- Fig. 12a: einen aus dem Flanschrohling aus Fig. 10 hergestellten Flansch aufweisend ein erstes Bohrbild; und
- Fig. 12b: einen aus dem Flanschrohling aus Fig. 10 hergestellten Flansch aufweisend ein zweites Bohrbild.

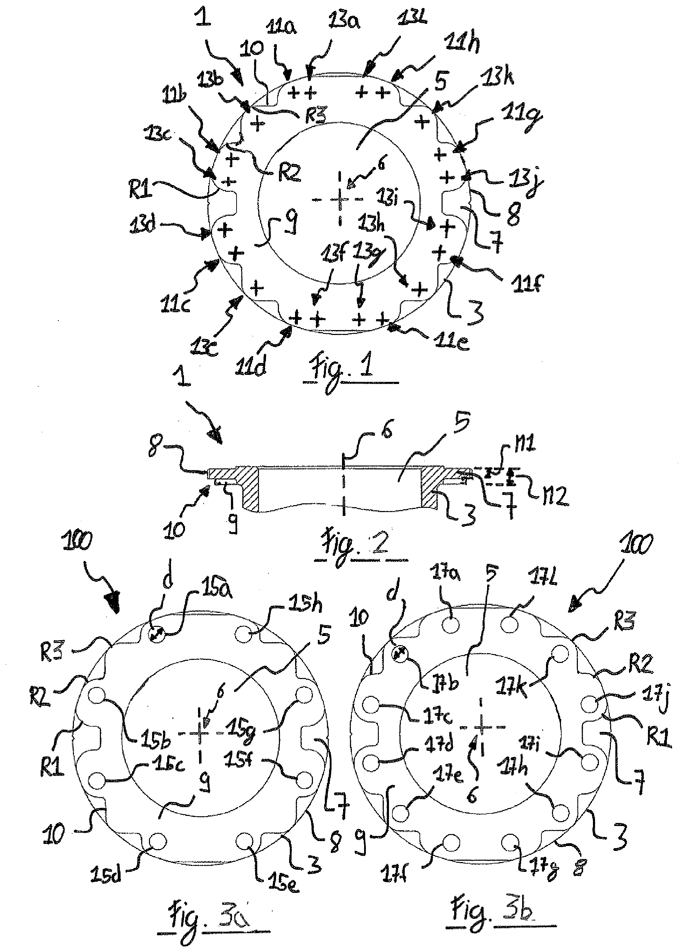

Gemäß Fig. 1 weist der Flanschrohling 1 einen Grundkörper 3 auf, welcher einen Fluiddurchgang 5, einen Stützabschnitt 7 und einen Kraftaufnahmeabschnitt 9 umfasst. Der Kraftaufnahmeabschnitt 9 ist zum wahlweisen Erzeugen von Durchgangslöchern entsprechend eines ersten Bohrbildes und/oder eines zweiten Bohrbildes ausgebildet.

Durch den Kraftaufnahmeabschnitt 9 erstrecken sich acht Mittelachsen 11a-11h der einzubringenden Durchgangslöcher des ersten Bohrbildes. Ferner erstrecken sich durch den Kraftaufnahmeabschnitt 9 zwölf Mittelachsen 13a-13l der einzubringenden Durchgangslöcher des zweiten Bohrbildes. Die Mittelachsen 11a-11h, 13a-13l der Durchgangslöcher des ersten Bohrbildes und des zweiten Bohrbildes sind vollumfänglich von dem Kraftaufnahmeabschnitt 9 umgeben.

Der Fluiddurchgang 5 erstreckt sich entlang einer Längsachse 6, wobei der Kraftaufnahmeabschnitt 9 in einer Ebene orthogonal zu der Längsachse 6 eine Außenkontur 10 aufweist. Die Außenkontur 10 ist spiegelsymmetrisch gegenüber einer Symmetrieebene, durch welche die Längsachse 6 verläuft.

Die Außenkontur 10 des Kraftaufnahmeabschnitts 9 umfasst eine Vielzahl von abgerundeten Abschnitten. Mehrere erste abgerundete Abschnitte der Außenkontur 10 des Kraftaufnahmeabschnitts 9 weisen einen ersten Radius R1 auf. Mehrere zweite abgerundete Abschnitte der Außenkontur 10 des Kraftaufnahmeabschnitts 9 weisen einen zweiten Radius R2 auf. Mehrere dritte abgerundete Abschnitte der Außenkontur 10 des Kraftaufnahmeabschnitts 9 weisen einen dritten Radius R3 auf.

Die Radien R1 der ersten abgerundeten Abschnitte der Außenkontur 10 des Kraftaufnahmeabschnitts 9 verlaufen koaxial zu den Mittelachsen 13c, 13d, 13i, 13j der Durchgangslöcher des zweiten Bohrbildes.

Die Radien R2 der zweiten abgerundeten Abschnitte verlaufen koaxial zu den Mittelachsen 11b, 11c, 11f, 11g der Durchgangsköcher des ersten Bohrbildes.

Die Radien R3 der vierten abgerundeten Abschnitte verlaufen koaxial zu den Mittelachsen 13b, 13e, 13h, 13k der Durchgangslöcher des zweiten Bohrbildes.

Der Stützabschnitt 7 des Flanschrohlings 1 weist eine orthogonal zu der Mittelachse 6 verlaufende Außenkontur 8 auf, welche im Wesentlichen kreisrund ausgebildet ist. Die Außenkontur 8 des Stützabschnitts 7 weist lediglich zwei gegenüberliegende Einkerbungen auf, welche innerhalb der Symmetrieebene des spiegelsymmetrisch ausgebildeten Kraftaufnahmeabschnitts 9 liegen.

Gemäß Fig. 2 umfasst der Flanschrohling 1 den Grundkörper 3, welcher den Fluiddurchgang 5, den Stützabschnitt 7 und den Kraftaufnahmeabschnitt 9 ausbildet. Der Stützabschnitt 7 weist eine erste Materialstärke M1 auf. Der Kraftaufnahmeabschnitt 9 weist eine zweite Materialstärke M2 auf. Die zweite Materialstärke M2 ist größer als die erste Materialstärke M1.

Der Flanschrohling aus Fig. 1 und Fig. 2 ist mittels des erfindungsgemäßen Verfahrens zum Herstellen eines Flanschrohlings hergestellt. Das verwendete Verfahren umfasst die Schritte:
- Herstellen eines Grundkörpers 3, wobei der Grundkörper 3 ein Fluiddurchgang 5, ein Stützabschnitt 7 mit einer ersten Materialstärke M1 und einen Kraftaufnahmeabschnitt 9 mit einer zweiten Materialstärke M2 umfasst, die zweite Materialstärke M2 größer ist als die erste Materialstärke M1 und der Kraftaufnahmeabschnitt 9 zum wahlweisen Erzeugen von Durchgangslöchern 15a-15h, 17a-17l (siehe Fig. 3a und 3b) entsprechend eines ersten Bohrbildes und/oder eines zweiten Bohrbildes ausgebildet ist.

Das erfindungsgemäße Herstellen des Grundkörpers 3 umfasst die folgenden Schritte:
- Herstellen eines Flanschrohlinggussstücks mittels eines Gussverfahrens unter Verwendung einer mehrteiligen, insbesondere zweiteiligen Gussform; und
- Nacharbeiten des Flanschrohlinggussstücks mittels eines spanenden Bearbeitungsverfahrens.

Der Flansch 100 gemäß Fig. 3a wurde aus einem Flanschrohling 1 gemäß Fig. 1 hergestellt. Der Flansch 100 weist acht Durchgangslöcher 15a-15h auf. Die Durchgangslöcher 15a-15h erstrecken sich entlang der in Fig. 1 dargestellten Mittelachsen 11a-11h. Die Anordnung und Anzahl der Durchgangslöcher 15a-15h entsprechen dem ersten Bohrbild. Die Durchgangslöcher 15a-15h weisen einen Durchmesser d auf.

Der Flansch 100 gemäß Fig. 3b wurde ebenfalls aus einem Flanschrohling 1 gemäß Fig. 1 hergestellt. Der Flansch 100 weist zwölf Durchgangslöcher 17a-17t auf. Die Durchgangslöcher 17a-17l erstrecken sich entlang der in Fig. 1 dargestellten Mittelachsen 13a-13l. Die Anordnung und Anzahl der Durchgangslöcher 17a-17l entsprechen dem zweiten Bohrbild. Die Durchgangslöcher 17a-17l weisen einen Durchmesser d auf.

Die Flansche 100 aus Fig. 3a und 3b sind mittels des erfindungsgemäßen Verfahrens zum Herstellen eines Flansches 100 hergestellt. Das verwendete Verfahren umfasst die folgenden Schritte:
- Herstellen von zwei identischen Flanschrohlingen 1 mittels des erfindungsgemäßen Verfahrens zum Herstellen eines Flanschrohlings 1, und
- wahlweises Erzeugen von Durchgangslöchern 15a-15h, 17a-17l entsprechend eines ersten und/oder zweiten Bohrbildes in dem Kraftaufnahmeabschnitt 9 des Grundkörpers 3.

Der Schritt des Erzeugens der Durchgangslöcher 15a-15h entsprechend des ersten Bohrbildes in dem Kraftaufnahmeabschnitt 9 des Grundkörpers umfasst die folgenden Schritte:
- Erzeugen von acht Bohrungen entsprechend des ersten Bohrbildes in dem Kraftaufnahmeabschnitt 9 des Grundkörpers 3;
- Erzeugen von Bohrungen in einer ersten Anordnung entsprechend des ersten Bohrbildes in dem Kraftaufnahmeabschnitt 9 des Grundkörpers 3;

Der Schritt des Erzeugens der Durchgangslöcher 17a-17l entsprechend des zweiten Bohrbildes in dem Kraftaufnahmeabschnitt 9 des Grundkörpers umfasst die folgenden Schritte:
- Erzeugen von zwölf Bohrungen entsprechend des zweiten Bohrbildes in dem Kraftaufnahmeabschnitt 9 des Grundkörpers 3;
- Erzeugen von Bohrungen in einer zweiten Anordnung entsprechend des zweiten Bohrbildes in dem Kraftaufnahmeabschnitt 9 des Grundkörpers 3.

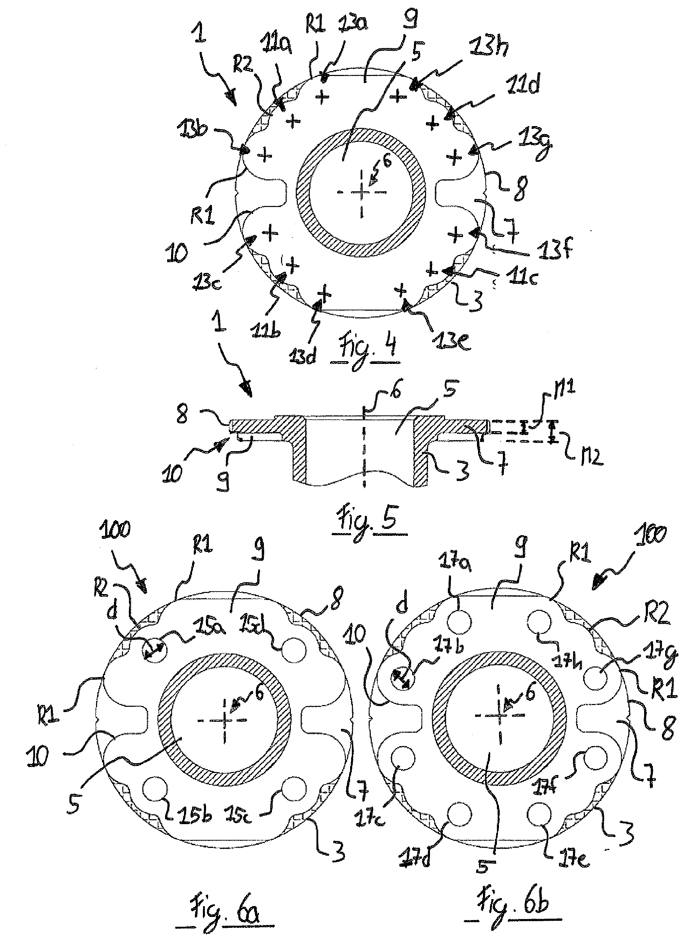

Gemäß Fig. 4 weist der Flanschrohling 1 einen Grundkörper 3 auf, welcher einen Fluiddurchgang 5, einen Stützabschnitt 7 und einen Kraftaufnahmeabschnitt 9 umfasst. Der Kraftaufnahmeabschnitt 9 ist zum wahlweisen Erzeugen von Durchgangslöchern entsprechend eines ersten Bohrbildes und/oder eines zweiten Bohrbildes ausgebildet.

Durch den Kraftaufnahmeabschnitt 9 erstrecken sich vier Mittelachsen 11a-11d der einzubringenden Durchgangslöcher des ersten Bohrbildes. Ferner erstrecken sich durch den Kraftaufnahmeabschnitt 9 acht Mittelachsen 13a-13h der einzubringenden Durchgangslöcher des zweiten Bohrbildes. Die Mittelachsen 11a-11d, 13a-13h der Durchgangslöcher des ersten Bohrbildes und des zweiten Bohrbildes sind vollumfänglich von dem Kraftaufnahmeabschnitt 9 umgeben.

Der Fluiddurchgang 5 erstreckt sich entlang einer Längsachse 6, wobei der Kraftaufnahmeabschnitt 9 in einer Ebene orthogonal zu der Längsachse 6 eine Außenkontur 10 aufweist. Die Außenkontur 10 ist spiegelsymmetrisch gegenüber einer Symmetrieebene, durch welche die Längsachse 6 verläuft.

Die Außenkontur 10 des Kraftaufnahmeabschnitts 9 umfasst eine Vielzahl von abgerundeten Abschnitten. Mehrere erste abgerundete Abschnitte der Außenkontur 10 des Kraftaufnahmeabschnitts 9 weisen einen ersten Radius R1 auf. Mehrere zweite abgerundete Abschnitte der Außenkontur 10 des Kraftaufnahmeabschnitts 9 weisen einen zweiten Radius R2 auf.

Die Radien R1 der ersten abgerundeten Abschnitte der Außenkontur 10 des Kraftaufnahmeabschnitts 9 verlaufen koaxial zu den Mittelachsen 13a-13h der Durchgangslöcher des zweiten Bohrbildes.

Die Radien R2 der zweiten abgerundeten Abschnitte verlaufen koaxial zu den Mittelachsen 11a-11d der Durchgangsköcher des ersten Bohrbildes.

Der Stützabschnitt 7 des Flanschrohlings 1 weist eine orthogonal zu der Mittelachse 6 verlaufende Außenkontur 8 auf, welche im Wesentlichen kreisrund ausgebildet ist. Die Außenkontur 8 des Stützabschnitts 7 weist lediglich zwei gegenüberliegende Einkerbungen auf, welche innerhalb der Symmetrieebene des spiegelsymmetrisch ausgebildeten Kraftaufnahmeabschnitts 9 liegen.

Gemäß Fig. 5 umfasst der Flanschrohling 1 den Grundkörper 3, welcher den Fluiddurchgang 5, den Stützabschnitt 7 und den Kraftaufnahmeabschnitt 9 ausbildet. Der Stützabschnitt 7 weist eine erste Materialstärke M1 auf. Der Kraftaufnahmeabschnitt 9 weist eine zweite Materialstärke M2 auf. Die zweite Materialstärke M2 ist größer als die erste Materialstärke M1.

Der Flansch 100 gemäß Fig. 6a wurde aus einem Flanschrohling 1 gemäß Fig. 4 hergestellt. Der Flansch 100 weist vier Durchgangslöcher 15a-15h auf. Die Durchgangslöcher 15a-15d erstrecken sich entlang der in Fig. 4 dargestellten Mittelachsen 11a-11d. Die Anordnung und Anzahl der Durchgangslöcher 15a-15d entsprechen dem ersten Bohrbild. Die Durchgangslöcher 15a-15d weisen einen Durchmesser d auf.

Der Flansch 100 gemäß Fig. 6b wurde ebenfalls aus einem Flanschrohling 1 gemäß Fig. 4 hergestellt. Der Flansch 100 weist acht Durchgangslöcher 17a-17h auf. Die Durchgangslöcher 17a-17h erstrecken sich entlang der in Fig. 4 dargestellten Mittelachsen 13a-13h. Die Anordnung und Anzahl der Durchgangslöcher 17a-17h entsprechen dem zweiten Bohrbild. Die Durchgangslöcher 17a-17h weisen einen Durchmesser d auf.

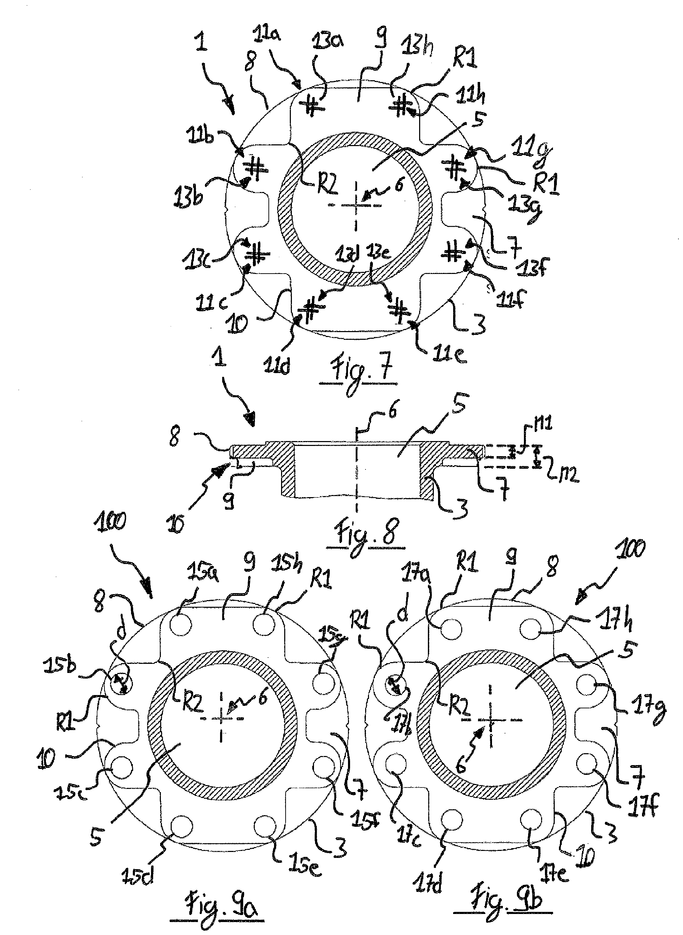

Gemäß Fig. 7 weist der Flanschrohling 1 einen Grundkörper 3 auf, welcher einen Fluiddurchgang 5, einen Stützabschnitt 7 und einen Kraftaufnahmeabschnitt 9 umfasst. Der Kraftaufnahmeabschnitt 9 ist zum wahlweisen Erzeugen von Durchgangslöchern entsprechend eines ersten Bohrbildes und/oder eines zweiten Bohrbildes ausgebildet.

Durch den Kraftaufnahmeabschnitt 9 erstrecken sich acht Mittelachsen 11a-11h der einzubringenden Durchgangslöcher des ersten Bohrbildes. Ferner erstrecken sich durch den Kraftaufnahmeabschnitt 9 acht Mittelachsen 13a-13h der einzubringenden Durchgangslöcher des zweiten Bohrbildes. Die Mittelachsen 11a-11h, 13a-13h der Durchgangslöcher des ersten Bohrbildes und des zweiten Bohrbildes sind vollumfänglich von dem Kraftaufnahmeabschnitt 9 umgeben.

Der Fluiddurchgang 5 erstreckt sich entlang einer Längsachse 6, wobei der Kraftaufnahmeabschnitt 9 in einer Ebene orthogonal zu der Längsachse 6 eine Außenkontur 10 aufweist. Die Außenkontur 10 ist spiegelsymmetrisch gegenüber einer Symmetrieebene, durch welche die Längsachse 6 verläuft.

Die Außenkontur 10 des Kraftaufnahmeabschnitts 9 umfasst eine Vielzahl von abgerundeten Abschnitten. Mehrere erste abgerundete Abschnitte der Außenkontur 10 des Kraftaufnahmeabschnitts 9 weisen einen ersten Radius R1 auf.

Die Radien R1 der ersten abgerundeten Abschnitte der Außenkontur 10 des Kraftaufnahmeabschnitts 9 verlaufen koaxial zu den Mittelachsen 13a-13h der Durchgangslöcher des zweiten Bohrbildes.

Der Stützabschnitt 7 des Flanschrohlings 1 weist eine orthogonal zu der Mittelachse 6 verlaufende Außenkontur 8 auf, welche im Wesentlichen kreisrund ausgebildet ist. Die Außenkontur 8 des Stützabschnitts 7 weist lediglich zwei gegenüberliegende Einkerbungen auf, welche innerhalb der Symmetrieebene des spiegelsymmetrisch ausgebildeten Kraftaufnahmeabschnitts 9 liegen.

Gemäß Fig. 8 umfasst der Flanschrohling 1 den Grundkörper 3, welcher den Fluiddurchgang 5, den Stützabschnitt 7 und den Kraftaufnahmeabschnitt 9 ausbildet. Der Stützabschnitt 7 weist eine erste Materialstärke M1 auf. Der Kraftaufnahmeabschnitt 9 weist eine zweite Materialstärke M2 auf. Die zweite Materialstärke M2 ist größer als die erste Materialstärke M1.

Der Flansch 100 gemäß Fig. 9a wurde aus einem Flanschrohling 1 gemäß Fig. 7 hergestellt. Der Flansch 100 weist acht Durchgangslöcher 15a-15h auf. Die Durchgangslöcher 15a-15h erstrecken sich entlang der in Fig. 7 dargestellten Mittelachsen 11a-11h. Die Anordnung und Anzahl der Durchgangslöcher 15a-15h entsprechen dem ersten Bohrbild. Die Durchgangslöcher 15a-15h weisen einen Durchmesser d auf.

Der Flansch 100 gemäß Fig. 9b wurde ebenfalls aus einem Flanschrohling 1 gemäß Fig. 7 hergestellt. Der Flansch 100 weist acht Durchgangslöcher 17a-17h auf. Die Durchgangslöcher 17a-17h erstrecken sich entlang der in Fig. 7 dargestellten Mittelachsen 13a-13h. Die Anordnung und Anzahl der Durchgangslöcher 17a-17h entsprechen dem zweiten Bohrbild. Die Durchgangslöcher 17a-17h weisen einen Durchmesser d auf.

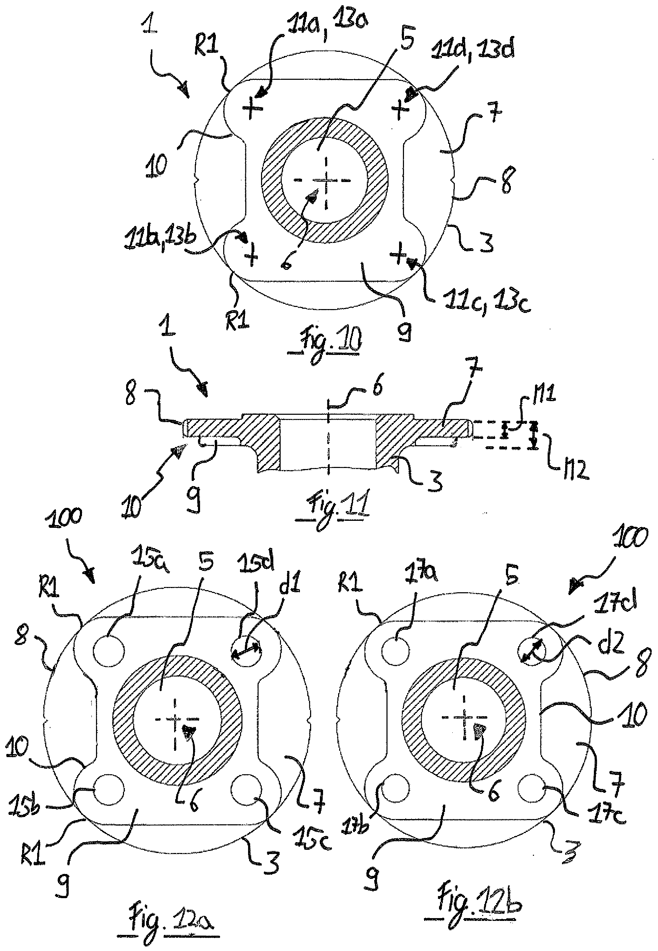

Gemäß Fig. 10 weist der Flanschrohling 1 einen Grundkörper 3 auf, welcher einen Fluiddurchgang 5, einen Stützabschnitt 7 und einen Kraftaufnahmeabschnitt 9 umfasst. Der Kraftaufnahmeabschnitt 9 ist zum wahlweisen Erzeugen von Durchgangslöchern entsprechend eines ersten Bohrbildes und/oder eines zweiten Bohrbildes ausgebildet.

Durch den Kraftaufnahmeabschnitt 9 erstrecken sich vier Mittelachsen 11a-11d der einzubringenden Durchgangslöcher des ersten Bohrbildes. Ferner erstrecken sich durch den Kraftaufnahmeabschnitt 9 vier Mittelachsen 13a-13d der einzubringenden Durchgangslöcher des zweiten Bohrbildes. Die Mittelachsen 11a-11d, 13a-13d der Durchgangslöcher des ersten Bohrbildes und des zweiten Bohrbildes sind vollumfänglich von dem Kraftaufnahmeabschnitt 9 umgeben.

Der Fluiddurchgang 5 erstreckt sich entlang einer Längsachse 6, wobei der Kraftaufnahmeabschnitt 9 in einer Ebene orthogonal zu der Längsachse 6 eine Außenkontur 10 aufweist. Die Außenkontur 10 ist spiegelsymmetrisch gegenüber einer Symmetrieebene, durch welche die Längsachse 6 verläuft.

Die Außenkontur 10 des Kraftaufnahmeabschnitts 9 umfasst eine Vielzahl von abgerundeten Abschnitten. Mehrere erste abgerundete Abschnitte der Außenkontur 10 des Kraftaufnahmeabschnitts 9 weisen einen ersten Radius R1 auf.

Die Radien R1 der ersten abgerundeten Abschnitte der Außenkontur 10 des Kraftaufnahmeabschnitts 9 verlaufen koaxial zu den Mittelachsen 11a-11d, 13a-13d der Durchgangslöcher des ersten und zweiten Bohrbildes.

Der Stützabschnitt 7 des Flanschrohlings 1 weist eine orthogonal zu der Mittelachse 6 verlaufende Außenkontur 8 auf, welche im Wesentlichen kreisrund ausgebildet ist. Die Außenkontur 8 des Stützabschnitts 7 weist lediglich zwei gegenüberliegende Einkerbungen auf, welche innerhalb der Symmetrieebene des spiegelsymmetrisch ausgebildeten Kraftaufnahmeabschnitts 9 liegen.

Gemäß Fig. 11 umfasst der Flanschrohling 1 den Grundkörper 3, welcher den Fluiddurchgang 5, den Stützabschnitt 7 und den Kraftaufnahmeabschnitt 9 ausbildet. Der Stützabschnitt 7 weist eine erste Materialstärke M1 auf. Der Kraftaufnahmeabschnitt 9 weist eine zweite Materialstärke M2 auf. Die zweite Materialstärke M2 ist größer als die erste Materialstärke M1.

Der Flansch 100 gemäß Fig. 12a wurde aus einem Flanschrohling 1 gemäß Fig. 10 hergestellt. Der Flansch 100 weist vier Durchgangslöcher 15a-15d auf. Die Durchgangslöcher 15a-15d erstrecken sich entlang der in Fig. 10 dargestellten Mittelachsen 11a-11d. Die Anordnung und Anzahl der Durchgangslöcher 15a-15d entsprechen dem ersten Bohrbild. Die Durchgangslöcher 15a-15d weisen einen Durchmesser d1 auf.

Der Flansch 100 gemäß Fig. 12b wurde ebenfalls aus einem Flanschrohling 1 gemäß Fig. 10 hergestellt. Der Flansch 100 weist vier Durchgangslöcher 17a-17d auf. Die Durchgangslöcher 17a-17d erstrecken sich entlang der in Fig. 10 dargestellten Mittelachsen 13a-13d. Die Anordnung und Anzahl der Durchgangslöcher 17a-17d entsprechen dem zweiten Bohrbild. Die Durchgangslöcher 17a-17d weisen einen Durchmesser d2 auf.

### Bezugszeichen

- 1: Flanschrohling
- 3: Grundkörper
- 5: Fluiddurchgang
- 6: Längsachse
- 7: Stützabschnitt
- 8: Außenkontur des Stützabschnitts
- 9: Kraftaufnahmeabschnitt
- 10: Außenkontur des Kraftaufnahmeabschnitts
- 1 1a - 11 h: Mittelachsen
- 13a - 13l: Mittelachsen
- 15a - 15h: Durchgangslöcher
- 17a - 17l: Durchgangslöcher

- 100: Flansch

- d, d1, d2: Ausnehmungsdurchmesser
- M1, M2: Materialstärken
- R1 - R3: Radien

## Patentansprüche

1. Verfahren zum Herstellen eines Flanschrohlings (1), mit dem Schritt:
- Herstellen eines Grundkörpers (3), wobei der Grundkörper (3) einen Fluiddurchgang (5), welcher sich entlang einer Längsachse (6) erstreckt, einen Stützabschnitt (7) mit einer ersten Materialstärke (M1) und einen Kraftaufnahmeabschnitt (9) mit einer zweiten Materialstärke (M2) umfasst und die zweite Materialstärke (M2) größer ist als erste Materialstärke (M1);
wobei der Kraftaufnahmeabschnitt (9) zum wahlweisen Erzeugen von Durchgangslöchern (15a - 15h, 17a - 17l) entsprechend eines ersten Bohrbildes und eines zweiten Bohrbildes ausgebildet ist,
wobei der Kraftaufnahmeabschnitt (9) in einer Ebene orthogonal zu der Längsachse (6) eine Außenkontur (10) aufweist, welche vorzugsweise rotationssymmetrisch um die Längsachse (6) oder spiegelsymmetrisch gegenüber einer Symmetrieebene, durch welche die Längsachse (6) verläuft, ausgebildet ist,
wobei die Außenkontur (10) des Kraftaufnahmeabschnitts (9) abgerundete Abschnitte umfasst, wobei mehrere erste abgerundete Abschnitte einen ersten Radius (R1) und mehrere zweite abgerundete Abschnitte einen zweiten Radius (R2) aufweisen, und
die Positionierung bzw. Anordnung sowie die Größe der einzelnen Radien (R1, R2) auf das erste Bohrbild und das zweite Bohrbild abgestimmt sind,
wobei die Radien (R1) der ersten abgerundeten Abschnitte koaxial zu den Mittelachsen (13a-13h) der Durchgangslöcher des zweiten Bohrbildes verlaufen, und
die Radien (R2) der zweiten abgerundeten Abschnitte koaxial zu den Mittelachsen (11a-11d) der Durchgangslöcher des ersten Bohrbildes verlaufen.

2. Verfahren nach Anspruch 1,
wobei der Schritt des Herstellens eines Grundkörpers (3) einen oder beide der folgenden Schritte umfasst:
- Herstellen eines Flanschrohlinggussstücks mittels eines Gussverfahrens;
- Nachbearbeiten des Flanschrohlinggussstücks mittels eines spanenden Bearbeitungsverfahrens.

3. Verfahren nach Anspruch 2,
wobei das Herstellen eines Flanschrohlinggussstücks mittels eines Gussverfahrens unter Verwendung einer mehrteiligen, insbesondere zweiteiligen Gussform erfolgt.

4. Verfahren zum Herstellen eines Flansches (100), mit den Schritten:
- Herstellen einer Anzahl von Flanschrohlingen (1)
mit dem Verfahren gemäß einem der vorstehenden Ansprüche,
- wahlweises Erzeugen von Durchgangslöchern (15a - 15h, 17a - 17l) entsprechend des ersten Bohrbildes und/oder des zweiten Bohrbildes in dem Kraftaufnahmeabschnitt (9) des Grundkörpers (3), und
wobei sich das erste Bohrbild und das zweite Bohrbild in der Anordnung und/oder Anzahl der Durchgangslöcher (15a - 15h, 17a - 17l) unterscheiden.

5. Verfahren nach Anspruch 4,
wobei der Schritt des wahlweisen Erzeugens von Durchgangslöchern (15a - 15h, 17a - 171) entsprechend eines ersten Bohrbildes und/oder eines zweiten Bohrbildes in dem Kraftaufnahmeabschnitt (9) des Grundkörpers (3) einen, mehrere oder sämtliche der folgenden Schritte umfasst:
- Erzeugen einer ersten Anzahl von Bohrungen entsprechend des ersten Bohrbildes in dem Kraftaufnahmeabschnitt (9) des Grundkörpers (3);
- Erzeugen von Bohrungen in einer ersten Anordnung entsprechend des ersten Bohrbildes in dem Kraftaufnahmeabschnitt (9) des Grundkörpers (3);
- Erzeugen einer zweiten Anzahl von Bohrungen entsprechend des zweiten Bohrbildes in dem Kraftaufnahmeabschnitt (9) des Grundkörpers (3);
- Erzeugen von Bohrungen in einer zweiten Anordnung entsprechend des zweiten Bohrbildes in dem Kraftaufnahmeabschnitt (9) des Grundkörpers (3).

6. Verfahren nach Anspruch 4,
wobei der Schritt des wahlweisen Erzeugens von Durchgangslöchern (15a - 15h, 17a - 171) entsprechend eines ersten Bohrbildes und/oder eines zweiten Bohrbildes in dem Kraftaufnahmeabschnitt (9) des Grundkörpers (3) einen der folgenden Schritte umfasst:
- Auswählen und Verwenden eines ersten Gusseinsatzes zum Erzeugen von Durchgangslöchern (15a - 15h) entsprechend des ersten Bohrbildes;
- Auswählen und Verwenden eines zweiten Gusseinsatzes zum Erzeugen von Durchgangslöchern (17a - 17l) entsprechend des zweiten Bohrbildes;
- Auswählen und Verwenden eines dritten Gusseinsatzes zum Erzeugen von Durchgangslöchern (15a - 15h, 17a - 17l) entsprechend des ersten und zweiten Bohrbildes.

7. Verfahren nach einem der Ansprüche 4 bis 6,
wobei mittels des Verfahrens zum Herstellen eines Flanschrohlings (1) gemäß einem der Ansprüche 1 bis 3 eine Mehrzahl identischer Flanschrohlinge (1) hergestellt wird, bevor in dem Kraftaufnahmeabschnitt (9) des Grundkörpers (3) eines ersten Flanschrohlings (1) Durchgangslöcher (15a - 15h) entsprechend des ersten Bohrbildes und in dem Kraftaufnahmeabschnitt (9) des Grundkörpers (3) eines zweiten Flanschrohlings (1) Durchgangslöcher (17a - 17l) entsprechend des zweiten Bohrbildes erzeugt werden.

8. Flanschrohling (1) für die Herstellung eines Flansches (100), mit
einem Grundkörper (3), welcher einen Fluiddurchgang (5), welcher entlang einer Längsachse (6) erstreckt, einen Stützabschnitt (7) mit einer ersten Materialstärke (M1) und einen Kraftaufnahmeabschnitt (9) mit einer zweiten Materialstärke (M2) umfasst, wobei die zweite Materialstärke (M2) größer ist als erste Materialstärke (M1),
wobei der Kraftaufnahmeabschnitt (9) zum wahlweisen Erzeugen von Durchgangslöchern (15a - 15h, 17a - 17l) entsprechend eines ersten Bohrbildes und eines zweiten Bohrbildes ausgebildet ist,
wobei der Kraftaufnahmeabschnitt (9) in einer Ebene orthogonal zu der Längsachse (6) eine Außenkontur (10) aufweist, welche vorzugsweise rotationssymmetrisch um die Längsachse (6) oder spiegelsymmetrisch gegenüber einer Symmetrieebene, durch welche die Längsachse (6) verläuft, ausgebildet ist,
wobei die Außenkontur (10) des Kraftaufnahmeabschnitts (9) abgerundete Abschnitte umfasst, und mehrere erste abgerundete Abschnitte einen ersten Radius (R1) und mehrere zweite abgerundete Abschnitte einen zweiten Radius (R2) aufweisen, und
die Positionierung bzw. Anordnung sowie die Größe der einzelnen Radien (R1, R2) auf das erste Bohrbild und das zweite Bohrbild abgestimmt sind,
wobei die Radien (R1) der ersten abgerundeten Abschnitte koaxial zu den Mittelachsen (13a-13h) der Durchgangslöcher des zweiten Bohrbildes verlaufen, und
dass die Radien (R2) der zweiten abgerundeten Abschnitte koaxial zu den Mittelachsen (11a-11d) der Durchgangslöcher des ersten Bohrbildes verlaufen.

9. Flanschrohling (1) nach Anspruch 8,
**dadurch gekennzeichnet, dass** der Kraftaufnahmeabschnitt (9) dazu angepasst ist, die Mittelachsen (11a - 11h, 13a - 13l) der Durchgangslöcher (15a - 15h, 17a - 17l) des ersten Bohrbildes und zweiten Bohrbildes vollumfänglich zu umgeben.

10. Verwendung eines Flanschrohlings (1) nach einem der Ansprüche 8 bis 9 in einem Verfahren zum Herstellen eines Flansches nach einem der Ansprüche 4 bis 7.

## Claims

1. A method for producing a flange blank (1), comprising the following step:
- producing a base body (3), wherein the base body (3) comprises a fluid passage (5), which extends along a longitudinal axis (6), a support section (7) having a first material thickness (M1) and a force-absorbing section (9) having a second material thickness (M2) and the second material thickness (M2) is greater than the first material thickness (M1);
wherein the force-absorbing section (9) is configured for the selective production of through-holes (15a - 15h, 17a - 17l) according to a first drilling pattern and/or a second drilling pattern;
wherein the force-absorbing section (9), in a plane orthogonal to the longitudinal axis (6), has an outer contour (10) which is preferably configured to be rotationally symmetrical about the longitudinal axis (6) or mirror-symmetrical with respect to a plane of symmetry through which the longitudinal axis (6) runs,
wherein the outer contour (10) of the force-absorbing section (9) comprises rounded sections, wherein a plurality of first rounded sections have a first radius (R1) and a plurality of second rounded sections have a second radius (R2), and
the positioning, i.e. arrangement, as well as the size of the individual radii (R1, R2) are matched to the first drilling pattern and to the second drilling pattern,
wherein the radii (R1) of the first rounded sections are coaxial with the central axes (13a-13h) of the through-holes of the second drilling pattern, and
the radii (R2) of the second rounded sections are coaxial with the central axes (11a-11d) of the through-holes of the first drilling pattern.

2. The method as claimed in claim 1,
wherein the step of producing a base body (3) comprises one or both of the following steps:
- producing a flange blank casting by means of a casting method;
- reworking the flange blank casting by means of a machining method.

3. The method as claimed in claim 2,
wherein the flange blank casting is produced by means of a casting method using a multipart, in particular two-part, casting mold.

4. A method for producing a flange (100), comprising the steps:
- producing a number of flange blanks (1) with the method as claimed in one of the preceding claims,
- selectively producing through-holes (15a - 15h, 17a - 17l) according to a first drilling pattern and/or a second drilling pattern in the force-absorbing section (9) of the base body (3), and
wherein the first drilling pattern and the second drilling pattern differ in the arrangement and/or number of through-holes (15a - 15h, 17a - 17l).

5. The method as claimed in claim 4,
wherein the step of selectively producing through-holes (15a - 15h, 17a - 17l) according to a first drilling pattern and/or a second drilling pattern in the force-absorbing section (9) of the base body (3) comprises one, several, or all of the following steps:
- producing a first number of bores according to the first drilling pattern in the force-absorbing section (9) of the base body (3);
- producing bores in a first arrangement according to the first drilling pattern in the force-absorbing section (9) of the base body (3);
- producing a second number of bores according to the second drilling pattern in the force-absorbing section (9) of the base body (3);
- producing bores in a second arrangement according to the second drilling pattern in the force-absorbing section (9) of the base body (3).

6. The method as claimed in claim 4,
wherein the step of selectively producing through-holes (15a - 15h, 17a - 17l) according to a first drilling pattern and/or a second drilling pattern in the force-absorbing section (9) of the base body (3) comprises one of the following steps:
- selecting and using a first casting insert to produce through-holes (15a - 15h) according to the first drilling pattern;
- selecting and using a second casting insert to produce through-holes (17a - 17l) according to the second drilling pattern;
- selecting and using a third casting insert to produce through-holes (15a - 15h, 17a - 17l) according to the first and the second drilling pattern.

7. The method as claimed in one of claims 4 to 6,
wherein a plurality of identical flange blanks (1) are produced with the method for producing a flange blank (1) as claimed in one of claims 1 to 3 before through-holes (15a - 15h) are produced in the force-absorbing section (9) of the base body (3) of a first flange blank (1) according to the first drilling pattern and through-holes (17a - 171) are produced in the force-absorbing section (9) of the base body (3) of a second flange blank (1) according to the second drilling pattern.

8. A flange blank (1) for producing a flange (100), comprising
a base body (3) which comprises a fluid passage (5) which extends along a longitudinal axis (6), a support section (7) having a first material thickness (M1) and a force-absorbing section (9) having a second material thickness (M2), wherein the second material thickness (M2) is greater than the first material thickness (M1),
wherein the force-absorbing section (9) is configured for selective production of through-holes (15a - 15h, 17a - 17l) according to a first drilling pattern and a second drilling pattern,
wherein the force-absorbing section (9), in a plane orthogonal to the longitudinal axis (6), has an outer contour (10) which is preferably configured to be rotationally symmetrical about the longitudinal axis (6) or mirror-symmetrical with respect to a plane of symmetry through which the longitudinal axis (6) runs,
wherein the outer contour (10) of the force-absorbing section (9) comprises rounded sections, wherein a plurality first rounded sections have a first radius (R1) and a plurality of second rounded sections have a second radius (R2), and
the positioning or arrangement and the size of the individual radii (R1, R2) are matched to the first drilling pattern and to the second drilling pattern,
wherein the radii (R1) of the first rounded sections are coaxial with the central axes (13a-13h) of the through-holes of the second drilling pattern, and the radii (R2) of the second rounded sections are coaxial with the central axes (11a-11d) of the through-holes of the first drilling pattern.

9. The flange blank (1) as claimed in claim 8,
**characterized in that** the force-absorbing section (9) is adapted to fully surround the central axes (11a - 11h, 13a - 13l) of the through-holes (15a - 15h, 17a - 17l) of the first drilling pattern and of the second drilling pattern.

10. A use of a flange blank (1) as claimed in one of claims 8 to 9 in a method for producing a flange as claimed in one of claims 4 to 7.

## Revendications

1. Procédé de fabrication d'une ébauche de flasque (1), avec l'étape :
- de fabrication d'un corps de base (3), dans lequel le corps de base (3) comprend un passage de fluide (5), lequel s'étend le long d'un axe longitudinal (6), une section d'appui (7) avec une première épaisseur de matériau (M1), et une section d'absorption de force (9) avec une deuxième épaisseur de matériau (M2), et la deuxième épaisseur de matériau (M2) est plus grande que la première épaisseur de matériau (M1) ;
dans lequel la section d'absorption de force (9) est réalisée pour générer au choix des trous de passage (15a - 15h, 17a - 17l) de manière à correspondre à un premier plan de perçage et à un deuxième plan de perçage,
dans lequel la section d'absorption de force (9) présente, dans un plan de manière orthogonale à l'axe longitudinal (6), un contour extérieur (10), lequel est réalisé de préférence de manière symétrique en rotation autour de l'axe longitudinal (6) ou de manière symétrique en miroir par rapport à un plan de symétrie, que l'axe longitudinal (6) traverse,
dans lequel le contour extérieur (10) de la section d'absorption de force (9) comprend des sections arrondies, dans lequel plusieurs premières sections arrondies présentent un premier rayon (R1) et plusieurs deuxièmes sections arrondies présentent un deuxième rayon (R2), et
le positionnement ou la disposition ainsi que la grandeur des divers rayons (R1, R2) sont adaptés au premier plan de perçage et au deuxième plan de perçage,
dans lequel les rayons (R1) des premières sections arrondies s'étendent de manière coaxiale par rapport aux axes médians (13a - 13h) des trous de passage du deuxième plan de perçage, et
les rayons (R2) des deuxièmes sections arrondies s'étendent de manière coaxiale par rapport aux axes médians (11a - 11d) des trous de passage du premier plan de perçage.

2. Procédé selon la revendication 1,
dans lequel l'étape de la fabrication d'un corps de base (3) comprend une ou les deux des étapes suivantes :
- la fabrication d'une pièce en fonte d'ébauche de flasque au moyen d'un procédé de coulée ;
- l'usinage ultérieur de la pièce en fonte d'ébauche de flasque au moyen d'un procédé d'usinage par enlèvement de copeaux.

3. Procédé selon la revendication 2,
dans lequel la fabrication d'une pièce en fonte d'ébauche de flasque est effectuée au moyen d'un procédé de coulée en utilisant un moule de coulée en plusieurs parties, en particulier en deux parties.

4. Procédé de fabrication d'un flasque (100), avec les étapes :
- de fabrication d'un nombre d'ébauches de flasque (1) avec le procédé selon l'une quelconque des revendications précédentes,
- de génération au choix de trous de passage (15a - 15h, 17a - 17l) de manière à correspondre au premier plan de perçage et/ou au deuxième plan de perçage dans la section d'absorption de force (9) du corps de base (3), et
dans lequel le premier plan de perçage et le deuxième plan de perçage se distinguent dans la disposition et/ou le nombre des trous de passage (15a - 15h, 17a - 17l).

5. Procédé selon la revendication 4,
dans lequel l'étape de la génération au choix de trous de passage (15a - 15h, 17a - 17l) de manière à correspondre à un premier plan de perçage et/ou à un deuxième plan de perçage dans la section d'absorption de force (9) du corps de base (3) comprend une, plusieurs ou la totalité des étapes suivantes :
- la génération d'un premier nombre d'alésages de manière à correspondre au premier plan de perçage dans la section d'absorption de force (9) du corps de base (3) ;
- la génération d'alésages dans une première disposition de manière à correspondre au premier plan de perçage dans la section d'absorption de force (9) du corps de base (3) ;
- la génération d'un deuxième nombre d'alésages de manière à correspondre au deuxième plan de perçage dans la section d'absorption de force (9) du corps de base (3) ;
- la génération d'alésages dans une deuxième disposition de manière à correspondre au deuxième plan de perçage dans la section d'absorption de force (9) du corps de base (3).

6. Procédé selon la revendication 4,
dans lequel l'étape de la génération au choix de trous de passage (15a - 15h, 17a - 17l) de manière à correspondre à un premier plan de perçage et/ou à un deuxième plan de perçage dans la section d'absorption de force (9) du corps de base (3) comprend une des étapes suivantes :
- la sélection et l'utilisation d'un premier insert de coulée pour générer des trous de passage (15a - 15h) de manière à correspondre au premier plan de perçage ;
- la sélection et l'utilisation d'un deuxième insert de coulée pour générer des trous de passage (17a - 17l) de manière à correspondre au deuxième plan de perçage ;
- la sélection et l'utilisation d'un troisième insert de coulée pour générer des trous de passage (15a - 15h, 17a -171) de manière à correspondre au premier et au deuxième plan de perçage.

7. Procédé selon l'une quelconque des revendications 4 à 6,
dans lequel une multitude d'ébauches de flasque (1) identiques est fabriquée au moyen du procédé de fabrication d'une ébauche de flasque (1) selon l'une quelconque des revendications 1 à 3 avant que des trous de passage (15a - 15h) ne soit générés de manière à correspondre au premier plan de perçage dans la section d'absorption de force (9) du corps de base (3) d'une première ébauche de flasque (1) et que des trous de passage (17a -171) ne soient générés de manière à correspondre au deuxième plan de perçage dans la section d'absorption de force (9) du corps de base (3) d'une deuxième ébauche de flasque (1).

8. Ebauche de flasque (1) pour la fabrication d'un flasque (100), avec
un corps de base (3), lequel comprend un passage de fluide (5), lequel s'étend le long d'un axe longitudinal (6), une section d'appui (7) avec une première épaisseur de matériau (M1) et une section d'absorption de force (9) avec une deuxième épaisseur de matériau (M2), dans laquelle la deuxième épaisseur de matériau (M2) est plus grande que la première épaisseur de matériau (M1),
dans laquelle la section d'absorption de force (9) est réalisée pour générer au choix des trous de passage (15a - 15h, 17a - 17l) de manière à correspondre à un premier plan de perçage et à un deuxième plan de perçage,
dans laquelle la section d'absorption de force (9) présente, dans un plan de manière orthogonale à l'axe longitudinal (6), un contour extérieur (10), lequel est réalisé de préférence de manière symétrique en rotation autour de l'axe longitudinal (6) ou de manière symétrique en miroir par rapport à un plan de symétrie, que l'axe longitudinal (6) traverse,
dans laquelle le contour extérieur (10) de la section d'absorption de force (9) comprend des sections arrondies et plusieurs premières sections arrondies présentent un premier rayon (R1) et plusieurs deuxièmes sections arrondies présentent un deuxième rayon (R2), et
le positionnement ou la disposition ainsi que la taille des divers rayons (R1, R2) sont adaptés sur le premier plan de perçage et le deuxième plan de perçage,
dans laquelle les rayons (R1) des premières sections arrondies s'étendent de manière coaxiale par rapport aux axes médians (13a - 13h) des trous de passage du deuxième plan de perçage, et
dans laquelle les rayons (R2) des deuxièmes sections arrondies s'étendent de manière coaxiale par rapport aux axes médians (11a - 11d) des trous de passage du premier plan de perçage.

9. Ebauche de flasque (1) selon la revendication 8,
**caractérisée en ce que** la section d'absorption de force (9) est adaptée pour entourer sur la totalité de la périphérie les axes médians (11a - 11h, 13a -131) des trous de passage (15a - 15h, 17a - 17l) du premier plan de perçage et du deuxième plan de perçage.

10. Utilisation d'une ébauche de flasque (1) selon l'une quelconque des revendications 8 à 9 dans un procédé de fabrication d'un flasque selon l'une quelconque des revendications 4 à 7.
